# FASCICULE DE BREVET EUROPEEN

(11) **EP 1 819 952 B1**
(45) Date de publication et mention de la délivrance du brevet: **27.10.2010**
(21) Numéro de dépôt: 05778789.7
(22) Date de dépôt: 21.06.2005
(51) Int. Cl.: F16K 5/04, F16K 11/085

(54) **VANNE DE COMMANDE POUR UN CIRCUIT DE CIRCULATION DE FLUIDE**
STEUERVENTIL FÜR EINEN FLUIDSTROMKREISLAUF
CONTROL VALVE FOR A FLUID FLOW CIRCUIT

(30) Priorité: 28.06.2004 FR 0407058
(43) Date de publication de la demande: 22.08.2007
(60) Demande divisionnaire: 10157837.5
(73) Titulaire: VALEO SYSTEMES THERMIQUES, 78321 Le Mesnil Saint Denis (FR)
(72) Inventeur: FARKH, Alain, 78490 Montfort l'Amaury (FR); VACCA, Frédéric, 78910 Behoust (FR); DUMETZ, Jean-Bernard, 78000 Versailles (FR); BARREAU Alexandre, 78640 Neauphle Le Château (FR)
(74) Mandataire: Rolland, Jean-Christophe
(86) Numéro de dépôt international: PCT/FR2005/001553
(87) Numéro de publication internationale: WO 2006/010806

(56) Documents cités:
- EP-A- 0 116 770
- DE-C1- 4 125 366
- FR-A- 2 827 357
- GB-A- 2 198 812
- US-A- 6 164 248

## Description

L'invention se rapporte à une vanne de commande pour un circuit de circulation de fluide, ainsi qu'aux circuits équipés d'une telle vanne.

Elle vise plus particulièrement à procurer une vanne de commandé destinée à un circuit de refroidissement d'un moteur thermique de véhicule automobile.

Un tel circuit de refroidissement est parcouru par un fluide de refroidissement, habituellement de l'eau additionnée d'un antigel, qui circule en circuit fermé sous l'action d'une pompe de circulation.

Généralement, le circuit de refroidissement comprend plusieurs branches, dont une branche qui contient un radiateur de refroidissement, une branche qui constitue une dérivation du radiateur de refroidissement et une branche qui contient un radiateur, encore appelé "aérotherme", servant au chauffage de l'habitacle.

Un tel circuit de refroidissement utilise, de manière classique, un thermostat ou une vanne thermostatique qui comprend une entrée de fluide reliée à la sortie du moteur et deux sorties de fluide qui correspondent, respectivement, à la branche contenant le radiateur de refroidissement et à la branche formant dérivation.

Lors du démarrage à froid du moteur, et tant que la température du fluide de refroidissement n'atteint pas un certain seuil, la vanne fait circuler le fluide de refroidissement dans la branche dérivation, en mettant en court-circuit le radiateur de refroidissement. Dès que la température du fluide de refroidissement atteint ou dépasse le seuil précité, le fluide de refroidissement traverse le radiateur et contourne la branche de dérivation.

Généralement, le fluide de refroidissement circule en permanence dans la branche qui contient l'aérotherme, le chauffage de l'habitacle étant alors obtenu par mixage d'un flux d'air froid et d'un flux d'air chaud qui a balayé cet aérotherme.

Cependant, la distribution des conduits d'entrée et de sortie sur le corps de vanne conduit à des réalisations encombrantes et à un couple d'entraînement de l'organe de réglage important.

Le périmètre de l'organe de réglage dépend en effet du diamètre des tubulures de sortie, du nombre de séquences employées et de la course nécessaire pour l'ouverture ou la fermeture progressive des orifices de sortie par l'organe de réglage.

La vanne de commande comprend un corps qui est muni d'au moins une entrée de fluide et d'au moins deux sorties de fluide. Le corps de la vanne est délimité en son intérieur par une paroi de fond et une paroi cylindrique disposées perpendiculairement l'une à l'autre et renferme un organe de réglage propre à tourner autour de l'axe longitudinal de la paroi cylindrique et à prendre différentes positions angulaires permettant de contrôler la distribution du fluide au travers des différentes sorties de la vanne.

Pour réduire l'encombrement et diminuer le couple d'entraînement de l'organe de réglage, une solution consiste à faire déboucher l'entrée du fluide au travers de la paroi de fond du corps de vanne et à faire déboucher les sorties de fluide au travers de la paroi cylindrique. L'organe de réglage comprend une partie conformée pour réaliser le contrôle des sorties de fluide avec une loi définie en fonction de la position angulaire de l'organe de réglage dans le corps de vanne.

Suivant des réalisations d'un premier type, l'organe de réglage présente la forme d'un corps plein cylindrique comportant à son extrémité en regard avec l'orifice d'entrée de fluide une face plane qui forme avec l'axe de rotation un angle voisin de 45°permettant de dévier le flux du liquide d'entrée dans les sorties latérales en fonction de l'angle de rotation de l'organe de réglage. Outre le fait que l'organe de réglage présente une inertie importante, ce type de réalisation induit une perte de charge dans le circuit de refroidissement, ce qui nuit dans certaines applications au bon fonctionnement du système de régulation de la température du fluide de refroidissement.

Pour diminuer l'inertie de l'organe de réglage, il est connu de conformer l'organe de réglage sous la forme d'un corps cylindrique creux traversé par des orifices latéraux permettant la distribution du fluide entrant suivant la direction de l'axe de rotation, dans les orifices de sortie radiaux du corps de vanne. Cependant, de façon similaire aux modes de réalisation précédents, les pertes de charge restent importantes et la progressivité du débit de fluide requise pour obtenir une bonne régulation à très faible débit n'est pas assurée.

On connaît du document FR2827357 une vanne selon le préambule de la revendication 1.

L'invention vise à améliorer cette situation.

Elle propose à cet effet une vanne de commande destinée à un circuit de circulation de fluide qui, dans une forme de réalisation préférée de l'invention, constitue un circuit de refroidissement d'un moteur thermique de véhicule automobile.

Dans cette application particulière, l'invention vise à procurer une vanne qui permet de gérer indépendamment le débit de fluide de refroidissement dans les différentes branches du circuit de refroidissement du moteur, afin d'optimiser la température du moteur thermique et le chauffage de l'habitacle. L'invention concerne ainsi plus particulièrement une vanne de commande pour un circuit de circulation de fluide, comprenant un corps qui délimite un logement cylindrique pour un organe de réglage propre à tourner autour d'un axe de rotation et à prendre différentes positions angulaires pour contrôler la distribution du fluide au travers d'orifices du corps de vanne.

Selon une caractéristique générale de l'invention, l'organe de réglage est réalisé sous la forme d'un corps cylindrique creux ouvert à au moins une de ses deux extrémités et tronqué à une extrémité ouverte suivant une direction de plan inclinée d'un angle (α) déterminé par rapport à l'axe de rotation, pour former avec une ouverture latérale placée à cette extrémité et intersectée par le dit plan, une zone d'ouverture latérale permettant de contrôler la progressivité du débit de fluide au travers d'au moins une ouverture du corps de vanne située en regard de cette extrémité et l'organe de réglage comprend une paroi latérale cylindrique maintenue autour d'un moyeu par l'intermédiaire d'une paroi de liaison transversale partageant l'intérieur de l'organe de réglage en deux cavités, une cavité inférieure mettant en communication une tubulure d'entrée avec une première tubulure de sortie de la vanne et une cavité supérieure mettant en communication deux autres tubulures de sortie et de la vanne, lesdites cavités communiquant entre elles par une ouverture ménagée dans la paroi de liaison transversale.

Plus particulièrement le corps de vanne comprend une paroi de fond munie d'une ouverture axiale et une paroi latérale cylindrique entourant l'organe de réglage et munie d'au moins deux ouvertures latérales à des hauteurs axiales et en des positions angulaires choisies par rapport à l'axe de rotation. Avantageusement, il est donné à l'ouverture située en regard de l'extrémité tronquée de l'organe de réglage une forme polygonale de type rectangulaire ou carré par exemple, ce qui permet d'obtenir une progressivité du débit de fluide en début d'ouverture très faible et facilite la régulation thermique du circuit de refroidissement.

Selon un mode de réalisation préférentiel, la cavité inférieure est ouverte et comporte une ouverture latérale intersectée par ledit plan incliné pour former à l'extrémité ouverte de la cavité inférieure ladite zone d'ouverture latérale qui permet, conjointement avec l'ouverture du corps de vanne en regard, de contrôler la progressivité du débit du fluide de refroidissement dans l'ouverture du corps de vanne.

La paroi de liaison transversale comporte au moins une ouverture latérale pour mettre en communication la cavité inférieure avec la cavité supérieure, et la cavité supérieure comporte au moins une ouverture latérale pour mettre en communication au moins un orifice latéral du corps de vanne, avec laquelle elle coopère, avec la cavité inférieure au travers de l'ouverture aménagée dans la paroi de liaison transversale.

Selon une autre caractéristique particulière, l'ouverture aménagée dans la paroi de liaison transversale est en forme de secteur circulaire dont le sommet est situé sur l'axe du moyeu.

Pour limiter les pertes de charge, la cloison de liaison transversale est renforcée par un congé sphérique ou parabolique reliant la cloison transversale à la cloison latérale de la première cavité.

Selon un autre aspect, l'invention concerne un circuit de circulation de fluide, lequel comprend une vanne de commande comme définie précédemment.

Dans une application préférentielle, le circuit est réalisé sous la forme d'un circuit de refroidissement d'un moteur thermique de véhicule automobile parcouru par un fluide de refroidissement sous l'action d'une pompe de circulation. Dans cette application, la vanne de commande est une vanne à trois voies dont le corps comprend une ouverture axiale reliée à une arrivée de fluide de refroidissement en provenance du moteur et trois ouvertures latérales de sortie de fluide reliées respectivement à une première branche qui contient un radiateur de refroidissement, une deuxième branche qui constitue une dérivation du radiateur de refroidissement et une troisième branche qui contient un aérotherme pour le chauffage de l'habitacle.

Selon une deuxième variante de réalisation, la vanne de commande alimente en fluide de refroidissement le moteur par son ouverture axiale, et l'ouverture latérale du corps coopérant avec la cavité inférieure de l'organe de réglage est reliée à la sortie du fluide du radiateur. Les deux ouvertures latérales du corps restantes sont reliées respectivement à une deuxième branche qui constitue une dérivation du radiateur de refroidissement et une troisième branche qui contient un aérotherme pour le chauffage de l'habitacle.

Dans la description qui suit, faite seulement à titre d'exemple, on se réfère aux dessins annexés, sur lesquels :
- les Figures 1 et 2 sont des vues de dessus et de face d'une vanne à trois voies, selon une première forme de réalisation de l'invention ;
- la Figure 3 est une vue en perspective d'un organe de réglage selon l'invention ;
- la Figure 4 est une vue en coupe d'une vanne selon un deuxième mode de réalisation de l'invention ;
- la Figure 5 est un diagramme de définition du domaine d'excursion ;
- la Figure 6 est un graphe de comparaison entre une forme d'ouverture circulaire et une forme d'ouverture carrée de même surface ;
- la Figure 7 est une vue développée de l'organe de réglage ;
- la Figure 8 est un graphe de comparaison entre deux courbes représentant des exemples de progressivité de section d'ouverture du fluide de refroidissement dans une ouverture de forme circulaire et une ouverture de forme rectangulaire en fonction de l'angle,de rotation de l'organe de réglage ;
- les Figures 9 et 10 sont deux exemples d'application d'une vanne selon l'invention aux circuits de refroidissement de moteurs thermiques de véhicules automobiles.

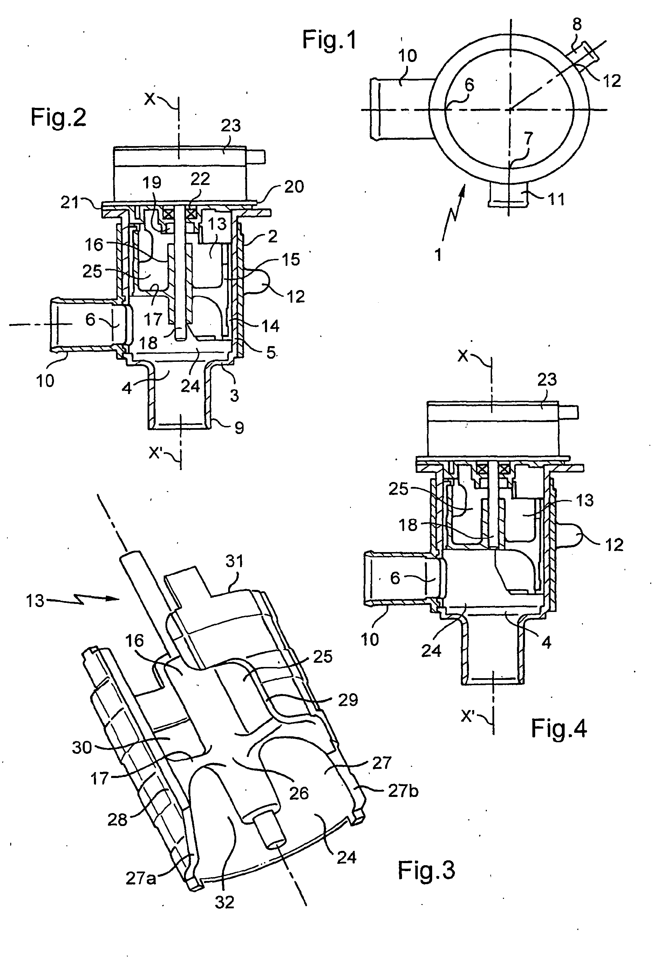

On se réfère d'abord aux Figures 1 et 2 qui montrent une vanne de commande 1 selon une première forme de réalisation de l'invention. Cette vanne de commande comprend un corps cylindrique 2 limité par une paroi de fond 3 munie d'une ouverture axiale 4 et une paroi latérale cylindrique 5 d'axe longitudinal XX' comportant des ouvertures latérales 6, 7 et 8. Dans l'ouverture axiale 4 débouche une tubulure 9 d'entrée de fluide. Dans les ouvertures latérales 6, 7 et 8 débouchent respectivement trois tubulures de sortie de fluide 10, 11 et 12. Ces trois tubulures de sortie débouchent à des hauteurs axiales et en des positions angulaires choisies par rapport à l'axe de rotation XX'.

A l'intérieur du corps de vanne 2, est logé un organe de réglage 13, encore appelé organe tournant, qui est réalisé sous la forme d'un corps creux recouvert éventuellement d'un segment ou joint d'étanchéité 14. Le diamètre de l'élément cylindrique correspond sensiblement au diamètre interne du corps de vanne 2. L'organe de réglage 13 comporte une paroi cylindrique 15 fixée autour d'un moyeu 16 par l'intermédiaire d'une paroi de liaison transversale 17. Le moyeu 16 peut être surmoulé ou emmanché le long d'une tige d'entraînement 18 d'axe longitudinal confondu avec l'axe XX', une extrémité du moyeu 16 étant placée en butée contre un épaulement 19 de la tige d'entraînement 18. Une extrémité de la tige d'entraînement 18 passe au travers d'un couvercle 20 qui est fixé sur une collerette 21 du corps de vanne 2. La tige d'entraînement 18 est maintenue libre en rotation autour de l'axe XX' par un palier 22 fixé sur le couvercle 20 et est entraînée en rotation par un moyen de motorisation 23 accouplé à l'extrémité de la tige d'entraînement 18 traversant le couvercle 20. Ce moyen de motorisation peut être constitué, par exemple, par un moteur sans balai à courant continu, encore connu sous l'abréviation anglo-saxonne BLDC de "brushless direct current", commandé éventuellement par un microprocesseur susceptible d'amener l'organe de réglage 13 dans une multiplicité de positions différentes.

Dans le mode de réalisation de la Figure 2, l'extrémité de la tige d'entraînement 18, opposée à celle qui traverse le couvercle 20, se prolonge à l'extérieur du moyeu 16 pour être éventuellement maintenue par un palier, non représenté, solidaire du fond 3 du corps de vanne 2. Cependant, l'adjonction d'un palier supplémentaire ne se justifie que pour des efforts importants capables d'entraîner des déformations de l'organe de réglage et par suite de nuire à son bon fonctionnement. Pour des efforts n'entraînant aucun risque de déformation de l'organe de réglage, un prolongement de la tige d'entraînement 18 hors du moyeu 16 n'est pas nécessaire, ce qui simplifie le mode de réalisation de la Figure 2 et permet de diminuer la longueur du moyeu 16, comme le montre l'exemple de la Figure 4 où les éléments homologues à ceux de la Figure 2 portent les mêmes références.

Selon une caractéristique essentielle de l'invention, la paroi de liaison transversale 17 partage l'intérieur de l'organe de réglage 13 en deux cavités 24, 25, une cavité inférieure 24 mettant en communication la tubulure d'entrée 9 avec la première tubulure de sortie 10 de la vanne et une cavité supérieure 25 mettant en communication les deux autres tubulures de sortie 7 et 8 de la vanne. Les qualificatifs "supérieure" et "inférieure" sont utilisés ici par commodité et n'entendent pas limiter l'invention à une disposition particulière des cavités dans l'espace.

Comme le montre la Figure 3, les deux cavités 24, 25 communiquent entre elles par une ouverture 26 de la paroi transversale 17 en forme de secteur circulaire dont le sommet est situé sur l'axe du moyeu 16. La cavité inférieure 24 comporte une ouverture latérale 27 tronquée suivant une direction de plan inclinée d'un angle α par rapport à l'axe longitudinal XX'.

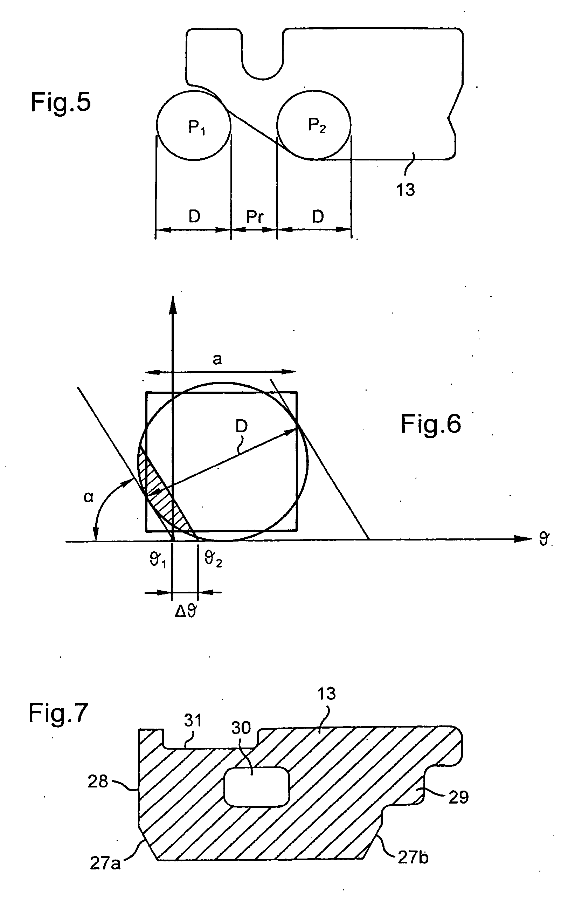

Cette ouverture tronquée 27 met en communication la tubulure d'entrée de fluide 9 avec la voie de sortie inférieure 10 par l'intermédiaire de la cavité inférieure lorsque l'ouverture tronquée 27 est positionnée en tout ou partie en face de la sortie de fluide inférieure 10. Elle permet, conjointement avec l'ouverture latérale 6 du corps de vanne 2 avec laquelle elle coopère, de contrôler la progressivité du débit du fluide de refroidissement dans l'ouverture latérale 6. Sur la Figure 3 et sur la représentation développée de l'organe de réglage 13 de la Figure 7, les bords 27a et 27b de l'ouverture tronquée 27 se prolongent dans la partie supérieure de l'organe de réglage 13 située au dessus de la paroi transversale 17 et forment une ouverture limitée par un bord rectiligne 28 orienté suivant une génératrice de la paroi cylindrique et par un bord opposé 29 dont le profil crénelé dépend du type de distribution choisi du fluide dans les orifices de sortie, en fonction de l'angle de rotation de l'organe de réglage.

La paroi cylindrique de la cavité supérieure 25 est également traversée par une ouverture 30 de forme éventuellement rectangulaire et comporte un bord supérieur crénelé 31 dont les positions et les dimensions sont déterminées pour permettre au fluide traversant la cavité supérieure 25 de pénétrer dans les ouvertures de sortie 7,8 de la vanne en des positions angulaires déterminées de l'organe de réglage.

Naturellement le mode de réalisation des Figures 3 et 7 n'est pas unique et l'on conçoit que le nombre, la position et les dimensions des ouvertures sont à déterminer dans chaque application en fonction de la position des ouvertures sur le corps de vanne et du séquencement retenu pour distribuer le fluide au travers des sorties.

Afin d'améliorer l'écoulement du fluide vers la voie inférieure, la face inférieure de la paroi de liaison transversale 17 qui est directement en regard avec l'ouverture axiale 4, est renforcée par un congé 32 de forme sphérique ou parabolique la reliant à la paroi cylindrique de l'organe de réglage, ce qui permet de mieux concentrer le flux du fluide de refroidissement vers cette sortie et diminuer les pertes de charge.

Le périmètre développé de l'organe de réglage 13 est déterminé en fonction du nombre et des dimensions des tubulures de sortie 10, 11, 12, des séquences d'ouverture et de fermeture des organes distribués et de l'excursion Pr entre deux états d'ouverture ou de fermeture des orifices de sortie.

La Figure 5 montre l'excursion Pr à faire parcourir à l'organe de réglage en partant d'une position initiale P1, pour laquelle l'ouverture de sortie 6 est pleinement ouverte, pour terminer dans une position finale P2, pour laquelle la sortie 6 est complètement fermée. Dans l'espace Pr compris entre ces deux positions, l'ouverture de sortie radiateur n'est ni complètement ouverte ni complètement fermée, et cet espace peut être utilisé pour réguler la circulation du fluide de refroidissement dans le radiateur.

Afin d'optimiser le diamètre de l'organe de réglage 13 et le réduire à une dimension minimum, il est donné aux ouvertures de sortie 6, 7, 8 une section en forme de carré ou de rectangle au lieu d'une forme circulaire, ce qui permet, à surfaces égales des ouvertures, de réduire la longueur développée de l'organe de réglage 13 et par suite son diamètre, comme le montre le diagramme de la Figure 6. Pour une ouverture en forme de carré de longueur de côté a et de surface a², comparée à une surface identique d'une ouverture circulaire de diamètre D et de surface π.D²/4, la longueur a du carré rapportée à celle du diamètre D est égale à 0,88xD. En disposant les carrés formés par les ouvertures de sortie de façon que deux de leurs côtés parallèles soient parallèles à l'axe de rotation XX', le gain obtenu est 0,12D.

En prenant pour exemple une vanne composée de trois branches (une branche radiateur, une branche dérivation et une branche aérotherme), de deux domaines de régulation et de trois positions fixes, et en désignant à la fois par D le diamètre de la branche radiateur et la longueur d'une position fixe et par Pr la longueur du domaine de progressivité, la longueur du domaine de régulation est égale à 2D+Pr et le périmètre du segment ainsi obtenu est P= (4+3)D+2Pr. Pour des ouvertures carrées, le périmètre P devient P=0,88.(4+ 3) .D +2 .P r, soit pour D=28mm une différence entre les deux périmètres de 21mm.

En plus, l'utilisation d'une ouverture en forme de carré permet une augmentation de l'angle a et donc une diminution de la distance de progressivité Pr.

Sur la Figure 6, où on a fait apparaître une progression du bord incliné d'angle a de l'organe de réglage entre une position angulaire θ1 de l'organe de réglage, pour laquelle le bord incliné de l'ouverture est tangent au bord de l'ouverture circulaire, et une position angulaire θ2 décalée d'un angle Δ θ par rapport à l'angle θ1, pour laquelle une portion seulement de l'ouverture est ouverte, on voit que quel que soit l'angle α, la progression de section en début d'ouverture, bien que dépendant de l'angle α, reste faible. Dans le cas de l'ouverture en forme de carré, cette progression dépend beaucoup plus fortement de l'inclinaison α du bord incliné de l'organe de réglage. Pour un angle α inférieur à 90°, par exemple, la progression de section en début d'ouverture, pour un même déplacement angulaire Δθ de l'organe de réglage, est plus faible que dans le cas d'une ouverture circulaire de même surface car la surface découverte est moins importante.

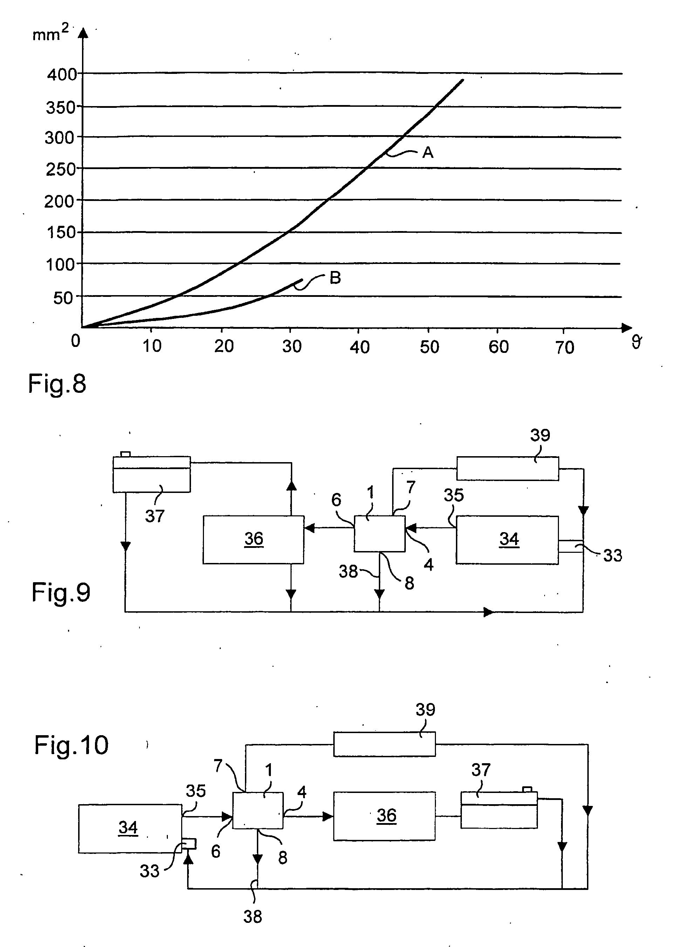

Un résultat de simulation de la progression de la section d'ouverture en début d'ouverture est montré sur le graphe de la Figure 8. Sur ce graphe, les courbes A et B représentent, en fonction de l'angle de rotation de l'angle de l'organe de réglage, les surfaces découvertes respectivement d'une ouverture circulaire et d'une ouverture carrée de mêmes surfaces et de même angle α= 37°. On voit nettement que la progression de surface de la courbe B est beaucoup plus faible que celle de la courbe A et qu'en conséquence le flux du fluide de refroidissement progresse beaucoup moins en début d'ouverture de l'ouverture en forme de carré que celle de l'ouverture de même surface en forme de cercle, d'où la possibilité de passer d'un angle α= 37°dans le cas d'une ouverture circulaire à α=64° pour une ouverture carrée, permettant d'optimiser la géométrie et diminuer l'encombrement.

On se réfère maintenant à la figure 9 qui montre un circuit pour le refroidissement d'un moteur thermique 34 de véhicule automobile. Le circuit est parcouru par un fluide de refroidissement, typiquement de l'eau additionnée d'un antigel, qui circule sous l'action d'une pompe 33. Le fluide, qui est chauffé par le moteur 34, quitte ce dernier par une sortie 35 qui est reliée à l'ouverture axiale 4 de la vanne de commande 2 du type décrit précédemment. Les trois ouvertures latérales 6, 7 et 8 du corps 2 sont reliées à trois branches du circuit. Ce circuit comprend une première branche qui contient un radiateur de refroidissement 36 et un vase d'expansion 37, une deuxième branche 38 qui forme une dérivation du radiateur de refroidissement 36 et une troisième branche qui contient un aérotherme 39 servant au chauffage de l'habitacle du véhicule. L'ouverture 6 est reliée à la branche contenant le radiateur 36, l'ouverture 7 est reliée à la branche qui contient l'aérotherme 39 et l'ouverture 8 à la branche qui contient la branche de dérivation 38.

L'ouverture latérale 6 du corps, qui coopère avec la cavité inférieure 24 de l'organe de réglage 13, est reliée à la branche radiateur.

Les ouvertures latérales 7 et 8 du corps 2, qui coopèrent avec la cavité supérieure 25 de l'organe de réglage 13, sont reliée respectivement à la deuxième branche et à la troisième branche.

La vanne permet ainsi de gérer indépendamment les débits de fluide dans les branches précitées, afin d'optimiser la température du moteur thermique et le chauffage de l'habitacle.

On notera cependant qu'il existe une autre variante au branchement de la vanne dans le circuit de refroidissement de la Figure 9 et qui consiste, plutôt que de brancher l'ouverture axiale 4 de la vanne 1 à la sortie 35 du moteur 34, de brancher celle ci à l'entrée du radiateur 36 comme ceci est représenté sur la Figure 10. Dans ce cas, l'ouverture latérale 6 du corps coopérant avec la cavité inférieure 24 de l'organe de réglage 13 est reliée à la sortie 35 du fluide du moteur 34, l'ouverture axiale 4 du corps 2 est reliée à une première branche qui contient le radiateur 36 et les deux ouvertures latérales 7 et 8 du corps 2 restantes sont reliées respectivement à une deuxième branche qui constitue une dérivation du radiateur de refroidissement 36 et une troisième branche qui contient un aérotherme 39 pour le chauffage de l'habitacle.

Selon encore une autre variante possible, non représentée, le branchement de la vanne peut aussi être réalisé en reliant respectivement les ouvertures latérales 6, 7 et 8 aux sorties de fluide du radiateur 36, de la branche de dérivation 38 et de l'aérotherme 39 et en reliant l'ouverture axiale 4 à l'entrée de fluide du moteur 34.

Il est possible aussi, dans une autre variante de réalisation, non représentée et ne faisant pas partie de l'invention telle que couverte par les revendications, d'utiliser un organe de réglage plein, mais tronqué, pour contrôler le débit de fluide au travers d'ouvertures du corps de vanne, à condition que l'une au moins des ouvertures présente une section de forme non circulaire, par exemple rectangulaire ou carrée, comme défini précédemment.

## Revendications

1. Vanne de commande (1) pour un circuit de refroidissement d'un moteur thermique, comprenant un corps (2) qui délimite un logement cylindrique pour un organe de réglage (13) propre à tourner autour d'un axe de rotation (XX') et à prendre différentes positions angulaires pour contrôler la distribution du fluide au travers d'ouvertures (4, 6, 7, 8) du corps de vanne (2), l'organe de réglage (13) étant réalisé sous la forme d'un corps cylindrique, **caractérisée en ce que** l'organe de réglage (13) est réalisé sous la forme d'un corps cylindrique creux ouvert, **en ce que** l'organe de réglage (13) est tronqué à une extrémité ouverte suivant une direction de plan inclinée d'un angle (α) déterminé par rapport à l'axe de rotation (XX') pour former, avec une ouverture latérale (27) placée à cette extrémité intersectée par le dit plan, une zone d'ouverture latérale (27) permettant de contrôler la progressivité du débit de fluide au travers d'au moins une ouverture latérale (6) du corps de vanne (2) située en regard de cette extrémité et **en ce que** l'organe de réglage (13) comprend une paroi latérale cylindrique (15) maintenue autour d'un moyeu (16) par l'intermédiaire d'une paroi de liaison transversale (17) partageant l'intérieur de l'organe de réglage (13) en deux cavités, une cavité inférieure (24) mettant en communication une tubulure d'entrée (9) avec une première tubulure de sortie (10) de la vanne et une cavité supérieure (25) mettant en communication deux autres tubulures de sortie (7) et (8) de la vanne, lesdites cavités communiquant entre elles par une ouverture (26) ménagée dans la paroi de liaison transversale (17).

2. Vanne selon la revendication 1, **caractérisée en ce que** le corps de vanne comprend une paroi de fond (3) munie d'une ouverture axiale (4) et une paroi latérale cylindrique (5) entourant l'organe de réglage (13) munie d'au moins deux ouvertures latérales (6, 7, 8) à des hauteurs axiales et en des positions angulaires choisies par rapport à l'axe de rotation (XX').

3. Vanne selon la revendication 1 ou 2, **caractérisée en ce qu'**au moins l'ouverture (6) située en regard de l'extrémité tronquée est en forme de carré ou de rectangle.

4. Vanne selon l'une des revendications 1 à 3, **caractérisée en ce que** la cavité inférieure (24) est tronquée et comporte une ouverture latérale (27) intersectée par ledit plan incliné qui permet, conjointement avec une ouverture latérale (6) du corps de vanne avec laquelle elle coopère, de contrôler la progressivité du débit du fluide de refroidissement dans cette ouverture (6).

5. Vanne selon l'une des revendications 1 à 4, **caractérisée en ce que** la cavité supérieure (25) comporte au moins une ouverture latérale (30) pour mettre en communication au moins une ouverture latérale (7,8) du corps de vanne, avec laquelle elle coopère, avec la cavité inférieure (24) au travers de l'ouverture (26) aménagée dans la paroi de liaison transversale (17).

6. Vanne selon l'une des revendications 1 à 5, **caractérisée en ce que** l'ouverture (26) aménagée dans la paroi de liaison transversale (17) est délimitée par un secteur circulaire dont le sommet est situé sur l'axe (XX') du moyeu.

7. Vanne selon l'une des revendications précédentes, **caractérisée en ce que** la cloison transversale (17) est renforcée par un congé sphérique ou parabolique (32) reliant la cloison de liaison transversale (17)à la cloison latérale de la première cavité (24).

8. Vanne selon l'une des revendications précédentes, **caractérisée en ce que** la vanne de commande (1) comprend des moyens de motorisation (23) propres à entraîner l'organe de réglage (13) pour l'amener dans des positions angulaires choisies par rapport au corps de vanne (2).

9. Circuit de refroidissement d'un moteur thermique (34) de véhicule automobile parcouru par un fluide de refroidissement sous l'action d'une pompe de circulation (33), **caractérisé en ce qu'**il comprend une vanne de commande (1) selon l'une des revendications précédentes, dont le corps (2) comprend une ouverture axiale (4) reliée à une arrivée (35) de fluide de refroidissement en provenance du moteur (34) et trois ouvertures latérales (6, 7, 8) de sortie de fluide reliées respectivement à une première branche qui contient un radiateur de refroidissement (36), une deuxième branche qui constitue une dérivation du radiateur de refroidissement (36) et une troisième branche qui contient un aérotherme (38) pour le chauffage de l'habitacle.

10. Circuit selon la revendication précédente, **caractérisé en ce que** l'ouverture latérale (6) du corps qui coopère avec la cavité inférieure (24) de l'organe de réglage (13) est reliée à la branche radiateur.

11. Circuit selon la revendication précédente, **caractérisé en ce que** les ouvertures latérales (7,8) du corps (2) qui coopèrent avec la cavité supérieure (25) de l'organe de réglage (13) sont reliées respectivement à la deuxième branche et à la troisième branche.

12. Circuit de refroidissement d'un moteur thermique (34) de véhicule automobile parcouru par un fluide de refroidissement sous l'action d'une pompe de circulation (33), **caractérisé en ce qu'**il comprend une vanne de commande (1) selon l'une des revendications 2 à 8, dans laquelle l'ouverture latérale (6) du corps coopérant avec la cavité inférieure de l'organe de réglage (13) est reliée à la sortie(35) du fluide du moteur (34), l'ouverture axiale du corps (4) est reliée à une première branche qui contient un radiateur (36) et les deux sorties latérales (7,8) du corps restantes sont reliées respectivement à une deuxième branche qui constitue une dérivation du radiateur de refroidissement (36) et une troisième branche qui contient un aérotherme (38) pour le chauffage de l'habitacle.

13. Circuit de refroidissement d'un moteur thermique (34) de véhicule automobile parcouru par un fluide de refroidissement sous l'action d'une pompe de circulation (33), **caractérisé en ce qu'**il comprend une vanne de commande (1) selon l'une des revendications 2 à 8, dans laquelle les ouvertures latérales (6, 7, 8) sont reliées respectivement aux sorties de fluide du radiateur (36), de la branche dérivation (38) et de l'aérotherme (39) et l'ouverture axiale (4) est reliée à l'entrée de fluide du moteur (34).

## Claims

1. Control valve (1) for a heat engine cooling circuit, comprising a body (2) that defines a cylindrical housing for an adjuster (13) that is able to rotate about an axis of rotation (XX') and adopt various angular positions for controlling the distribution of coolant through openings (4, 6, 7, 8) in the valve body (2), the adjuster (13) being produced in the form of a cylindrical body, which valve is **characterized in that** the adjuster (13) is produced in the form of an open hollow cylindrical body, **in that** the adjuster (13) is truncated at an open end on a plane inclined at an angle (α) defined with respect to the axis of rotation (XX') to form, with a side opening (27) located at this end intersected by said plane, an open side region (27) that makes it possible to modulate the flow of coolant through at least one side opening (6) of the valve body (2) situated facing this end and **in that** the adjuster (13) comprises a cylindrical side wall (15) held in position about a hub (16) by a transverse connecting wall (17) that divides the interior of the adjuster (13) intro two cavities, a lower cavity (24) allowing communication between an inlet tube (9) and a first outlet tube (10) of the valve and an upper cavity (25) allowing communication between two other outlet tubes (7) and (8) of the valve, said cavities communicating with each other through an opening (26) in the transverse connecting wall (17).

2. Valve according to Claim 1, **characterized in that** the valve body comprises an end wall (3) containing an axial opening (4) and a cylindrical side wall (5) which surrounds the adjuster (13) and which contains at least two side openings (6, 7, 8) at axial heights and in angular positions selected with respect to the axis of rotation (XX').

3. Valve according to Claim 1 or 2, **characterized in that** at least the opening (6) situated facing the truncated end is a square or a rectangle.

4. Valve according to one of Claims 1 to 3, **characterized in that** the lower cavity (24) is truncated and comprises a side opening (27) intersected by said inclined plane which makes it possible, together with a side opening (6) in the valve body with which it cooperates, to modulate the flow of coolant through this opening (6).

5. Valve according to one of Claims 1 to 4, **characterized in that** the upper cavity (25) comprises at least one side opening (30) for connecting at least one side opening (7, 8) of the valve body, with which it cooperates, to the lower cavity (24) through the opening (26) in the transverse connecting wall (17) .

6. Valve according to one of Claims 1 to 5, **characterized in that** the opening (26) in the transverse connecting wall (17) is defined by a sector of a circle whose apex is situated on the axis (XX') of the hub.

7. Valve according to one of the preceding claims, **characterized in that** the transverse partition (17) is reinforced by a spherical or parabolical fillet (32) connecting the transverse connecting partition (17) to the side partition of the first cavity (24).

8. Valve according to one of the preceding claims, **characterized in that** the control valve (1) comprises motor means (23) able to drive the adjuster (13) to selected angular positions with respect to the valve body (2).

9. Cooling circuit for a motor vehicle heat engine (34) through which a coolant is pumped by a circulating pump (33), which circuit is **characterized in that** it comprises a control valve (1) according to one of the preceding claims, whose body (2) comprises an axial opening (4) connected to an inlet (35) for coolant coming from the engine (34) and three fluid-outlet side openings (6, 7, 8) connected respectively to a first branch containing a cooling radiator (36), a second branch forming a bypass around the cooling radiator (36), and a third branch containing a heater core (38) for cabin heating.

10. Circuit according to the preceding claim, **characterized in that** the side opening (6) of the body which cooperates with the lower cavity (24) of the adjuster (13) is connected to the radiator branch.

11. Circuit according to the preceding claim, **characterized in that** the side openings (7, 8) of the body (2) which cooperate with the upper cavity (25) of the adjuster (13) are connected to the second and third branches, respectively.

12. Cooling circuit for a motor vehicle heat engine (34) through which a coolant is pumped by a circulating pump (33), which circuit is **characterized in that** it comprises a control valve (1) according to one of Claims 2 to 8, in which the side opening (6) of the body cooperating with the lower cavity of the adjuster (13) is connected to the outlet (35) of the coolant from the engine (34), the axial opening of the body (4) is connected to a first branch containing a radiator (36), and the two remaining side outlets (7, 8) of the body are connected, one to a second branch forming a bypass around the cooling radiator (36), and the other to a third branch containing a heater core (38) for cabin heating.

13. Cooling circuit for a motor vehicle heat engine (34) through which a coolant is pumped by a circulating pump (33), which circuit is **characterized in that** it comprises a control valve (1) according to one of Claims 2 to 8, in which the side openings (6, 7, 8) are connected respectively to the coolant outlets of the radiator (36), of the bypass branch (38), and of the heater core (39), and the axial opening (4) is connected to the coolant inlet of the engine (34).

## Patentansprüche

1. Steuerventil (1) für einen Kühlmittelkreislauf eines Verbrennungsmotors, das einen Körper (2) enthält, der einen zylindrischen Sitz für ein Stellglied (13) begrenzt, das um eine Drehachse (XX') drehen und verschiedene winkelstellungen einnehmen kann, um die Verteilung des Fluids durch Öffnungen (4, 6, 7, 8) des Ventilkörpers (2) zu steuern, wobei das Stellglied (13) in Form eines zylindrischen Körpers hergestellt ist, **dadurch gekennzeichnet, dass** das Stellglied (13) in Form eines offenen hohlen zylindrischen Körpers hergestellt ist, dass das Stellglied (13) an einem offenen Ende gemäß einer um einen bestimmten Winkel (α) bezüglich der Drehachse (XX') geneigten Ebenenrichtung abgestumpft ist, um mit einer an diesem von der Ebene geschnittenen Ende angeordneten seitlichen Öffnung (27) eine seitliche Öffnungszone (27) zu formen, die es ermöglicht, die Regelcharakteristik des Kühlmitteldurchsatzes durch mindestens eine seitliche Öffnung (6) des Ventilkörpers (2) zu steuern, die sich gegenüber diesem Ende befindet, und dass das Stellglied (13) eine zylindrische Seitenwand (15) enthält, die um eine Nabe (16) herum mittels einer Querverbindungswand (17) gehalten wird, die das Innere des Stellglieds (13) in zwei Hohlräume aufteilt, einen unteren Hohlraum (24), der einen Eingangsstutzen (9) mit einem ersten Ausgangsstutzen (10} des Ventils in Verbindung setzt, und einen oberen Hohlraum (25), der zwei andere Ausgangsstutzen (7) und (8) des Ventils in Verbindung setzt, wobei die Hohlräume miteinander über eine Öffnung (26) in Verbindung stehen, die in der Querverbindungswand (17) ausgespart ist.

2. Ventil nach Anspruch 1, **dadurch gekennzeichnet, dass** der Ventilkörper eine mit einer axialen Öffnung (4) versehene Bodenwand (3) und eine das Stellglied (13) umgebende zylindrische Seitenwand (5) enthält, die mit mindestens zwei seitlichen Öffnungen (6, 7, 8) in axialen Höhen und in Winkelstellungen versehen ist, die bezüglich der Drehachse (XX') gewählt werden.

3. Ventil nach Anspruch 1 oder 2, **dadurch gekennzeichnet, dass** mindestens die gegenüber dem abgestumpften Ende befindliche Öffnung (6) die Form eines Quadrats oder eines Rechtecks hat.

4. Ventil nach einem der Ansprüche 1 bis 3, **dadurch gekennzeichnet, dass** der untere Hohlraum (24) abgestumpft ist und eine von der geneigten Ebene geschnittene seitliche Öffnung (27) aufweist, die es zusammen mit einer seitlichen Öffnung (6) des Ventilkörpers, mit der sie zusammenwirkt, ermöglicht, die Regelcharakteristik des Kühlmitteldurchsatzes in dieser Öffnung (6) zu steuern.

5. Ventil nach einem der Ansprüche 1 bis 4, **dadurch gekennzeichnet, dass** der obere Hohlraum (25) mindestens eine seitliche Öffnung (30) aufweist, um mindestens eine seitliche Öffnung (7, 8) des Ventilkörpers, mit der sie zusammenwirkt, mit dem unteren Hohlraum (24) durch die in der Querverbindungswand (17) ausgesparte Öffnung (26) hindurch in Verbindung zu setzen.

6. Ventil nach einem der Ansprüche 1 bis 5, **dadurch gekennzeichnet, dass** die in der Querverbindungswand (17) ausgesparte Öffnung (26) von einem Kreissektor begrenzt wird, dessen Scheitel sich auf der Achse (XX') der Nabe befindet.

7. Ventil nach einem der vorhergehenden Ansprüche, **dadurch gekennzeichnet, dass** die Quertrennwand (17) durch eine kugelförmige oder parabolische Ausrundung (32) verstärkt wird, die die Querverbindungswand (17) mit der Seitentrennwand des ersten Hohlraums (24) verbindet.

8. Ventil nach einem der vorhergehenden Ansprüche, **dadurch gekennzeichnet, dass** das Steuerventil (1) Antriebseinrichtungen (23) aufweist, die das Stellglied (13) antreiben können, um es in gewählte Winkelstellungen bezüglich des Ventilkörpers (2) zu bringen.

9. Kühlmittelkreislauf eines Kraftfahrzeug-Verbrennungsmotors (34), der unter der Wirkung einer Umwälzpumpe (33) von einem Kühlmittel durchflossen wird, **dadurch gekennzeichnet, dass** er ein Steuerventil (1) nach einem der vorhergehenden Ansprüche aufweist, dessen Körper (2) eine axiale Öffnung (4), die mit einer Zufuhr (35) von vom Motor (34) kommendem Kühlmittel verbunden ist, und drei seitliche Kühlmittelaustrittsöffnungen (6, 7, 8) enthält, die mit einem ersten Zweig, der einen Kühler (36) enthält, einem zweiten Zweig, der eine Abzweigung des Kühlers (36) bildet, bzw. mit einem dritten Zweig verbunden sind, der einen Warmlufterzeuger (38) zur Erwärmung des Fahrgastraums enthält.

10. Kreislauf nach dem vorhergehenden Anspruch, **dadurch gekennzeichnet, dass** die seitliche Öffnung (6) des Körpers, die mit dem unteren Hohlraum (24) des Stellglieds (13) zusammenwirkt, mit dem Kühlerzweig verbunden ist.

11. Kreislauf nach dem vorhergehenden Anspruch, **dadurch gekennzeichnet, dass** die seitlichen Öffnungen (7, 8) des Körpers (2), die mit dem oberen Hohlraum (25) des Stellglieds (13) zusammenwirken, mit dem zweiten Zweig bzw. dem dritten Zweig verbunden sind.

12. Kühlmittelkreislauf eines Kraftfahrzeug-Verbrennungsmotors (34), der unter der Wirkung einer Umwälzpumpe (33) von einem Kühlmittel durchflossen wird, **dadurch gekennzeichnet, dass** er ein Steuerventil (1) nach einem der Ansprüche 2 bis 8 enthält, bei dem die seitliche Öffnung (6) des Körpers, die mit dem unteren Hohlraum des Stellglieds (13) zusammenwirkt, mit dem Kühlmittelausgang (35) des Motors (34) verbunden ist, die axiale Öffnung (4) des Körpers mit einem ersten Zweig verbunden ist, der einen Kühler (36) enthält, und die zwei restlichen seitlichen Öffnungen (7, 8) des Körpers mit einem zweiten Zweig, der eine Abzweigung des Kühlers (36) bildet, bzw. mit einem dritten Zweig verbunden sind, der einen Warmlufterzeuger (39) zur Erwärmung des Fahrgastraums enthält.

13. Kühlmittelkreislauf eines Kraftfahrzeug-Verbrennungsmotors (34), der unter der Wirkung einer Umwälzpumpe (33) von einem Kühlmittel durchflossen wird, **dadurch gekennzeichnet, dass** er ein Steuerventil (1) nach einem der Ansprüche 2 bis 8 enthält, bei dem die seitlichen Öffnungen (6, 7, 8) mit den Kühlmittelausgängen des Kühlers (36), des Abzweigungszweigs (38), bzw. des Warmlufterzeugers (39) verbunden sind, und die axiale Öffnung (4) mit dem Kühl.znitteleingang des Motors (34) verbunden ist.
